# EUROPEAN PATENT SPECIFICATION

(11) **EP 3 148 795 B1**
(45) Date of publication and mention of the grant of the patent: **11.04.2018**
(21) Application number: 15725403.8
(22) Date of filing: 13.05.2015
(51) Int. Cl.: B32B 7/06, B32B 7/12, B32B 27/08, B32B 3/26, B65D 75/00, B65D 33/00

(54) **SHEET FOR FORMING A PACKAGE**
FOLIE ZUR HERSTELLUNG EINER VERPACKUNG
FEUILLE POUR LA FORMATION D'UN EMBALLAGE

(30) Priority: 27.05.2014 GB 201409331
(43) Date of publication of application: 05.04.2017
(73) Proprietor: Parkside Flexibles (Europe) Limited, Wakefield, Yorkshire WF6 1RL (GB)
(72) Inventor: SHAW, Mark, Wakefield Yorkshire WF6 1RL (GB); DIXON, John, Wakefield Yorkshire WF6 1RL (GB)
(74) Representative: CMS Cameron McKenna Nabarro Olswang LLP
(86) International application number: PCT/GB2015/051412
(87) International publication number: WO 2015/181524

(56) References cited:
- GB-A- 2 503 738
- US-A1- 2011 180 432
- US-A1- 2013 284 738

## Description

### Technical Field

This disclosure relates to a sheet for forming a package.

### Background

It is desirable that packaged commodities remain fresh for consumption for as long as possible. Examples of commodities which are packaged to remain fresh are cigarettes and other tobacco industry products. A conventional way of packaging cigarettes is to wrap the cigarettes within a foil paper, with the foil paper lying within a card box. A plastic wrapper may surround the card box. The plastic wrapper is typically discarded when the pack is first opened, and provides an indication that the pack has not previously been opened.

More recently, cigarettes have been packaged with a multi-layer laminate wrapper. The laminate wrapper can be provided with a resealable opening. The laminate wrapper can be provided within a card box or can be provided around the outside of a card frame. The laminate can remain in place after the package has been opened.

A further way of preserving the contents of a package is by removing some, or all, of the atmospheric air from the interior of the package. The interior of the package can be pressurised with an inert gas (e.g. nitrogen) or can be sealed at a sub-atmospheric pressure. The package can comprise a one-way valve to maintain a pressure differential between the interior of the package and the exterior of the package.

There is a requirement for alternative packaging which can help to preserve a packaged commodity.

GB 2503738 A discloses a laminate for forming a package comprising first and second layers, a first cut through the first layer but not the second, and a second cut through the second layer but not the first.

US 2013/0284738 A1 discloses a sheet material for use in packaging having at least a first layer and at least a second layer, wherein the first layer and the second layer are bonded together to fabricate the sheet material such that an area between the first layer and the second layer is unbonded.

### Summary

There is provided a sheet for forming a package comprising a flexible sheet having at least a single layer, the flexible sheet having a first thickness; an openable portion defined by a line of weakness in at least one layer of the flexible sheet; a valve comprising a plurality of layers arranged on top of one another and a flow path through the layers which is openable and closable in response to a pressure differential across the plurality of layers, wherein the valve is located on the openable portion and provides the openable portion with a second thickness which is greater than the first thickness.

A selection of optional features is set out in the dependent claims.

### Brief Description of the Drawings

Embodiments of the invention will be described, by way of example, with reference to the following drawings, in which:
Figure 1A shows an assembled package;
Figure 1B shows a container which fits within the package;
Figure 1C shows the assembled package in an opened state;
Figure 2A shows a plan view of an example valve positioned on the outer wrapper of the package;
Figure 2B shows a cross-section along A-A' of Figure 2A;
Figure 3A shows a plan view of an example valve positioned on the outer wrapper of the package;
Figure 3B shows a cross-section along B-B' of Figure 3A;
Figure 4A shows a three-layer laminate which can be used for providing a resealable opening in the laminate;
Figures 4B and 4C show a resealable opening in the sheet laminate;
Figure 4D shows the opening of Figure 4B and 4C partially opened;
Figure 4E shows a cross-section through the laminate and valve;
Figure 5A shows a two-layer laminate which can be used for providing a resealable opening in the laminate;
Figures 5B and 5C show a resealable opening in the sheet laminate;
Figure 6 shows a cross-section of another laminate incorporating a valve;
Figure 7 shows an alternative resealable opening in the sheet laminate;
Figure 8 shows a method of packaging products.

The sheet may be a wrapper located around a quantity of a product. The package may further comprising a container with an openable portion, wherein the quantity of the wrapper-enclosed product is within the container and wherein the openable portion of the wrapper is located beneath the openable portion of the container.

The product may be a tobacco industry product.

The preferred features may be combined as appropriate, as would be apparent to a skilled person, and may be combined with any of the aspects of the invention.

Common reference numerals are used throughout the figures to indicate similar features.

### Detailed Description

Embodiments of the present invention are described below by way of example only. These examples represent the best ways of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

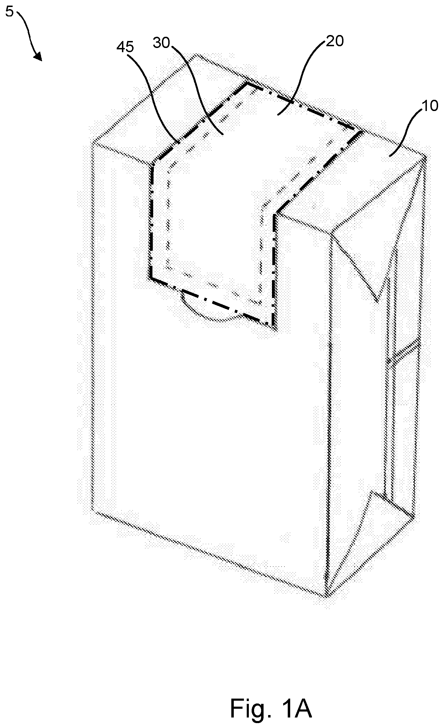

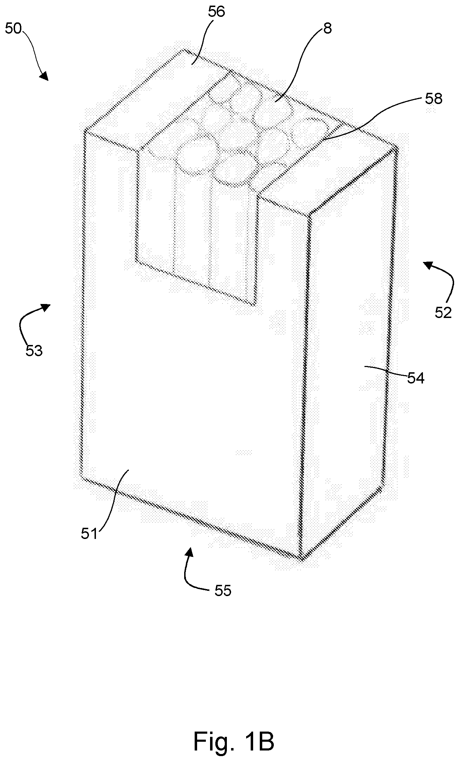

Figures 1A-1C show an example package 5. The package in Figures 1A-1C is for tobacco industry products, such as cigarettes. More generally, a package can be provided for any type of packaged commodity. The package 5 has a wrapper 10 of a flexible sheet, such as a single layer material or a multi-layer laminate. The package 5 also comprises a container 50 containing a quantity of tobacco industry products. The container 50 is shown in Figure 1B. The wrapper 10 shown in Figure 1A is wrapped around the container 50. The container 50 can comprise, for example, a box, a frame or any other structure for containing the products. The container may not enclose the products on all faces. For example, it may lack at least part of a top end face. The container can be formed of card, a polymer material, or any other suitable material. The material may be biodegradable and/or compostable. The example container 50 shown in Figure 1B has a front panel 51, a back panel 52, two side panels 53, 54, a base 55 and a partial top panel 56. A cut-out 58 is located in an upper central part of the front panel 51 and in a central part of the top panel 56. The cut-out 58 corresponds to the location of an openable portion 20 of the wrapper 10.

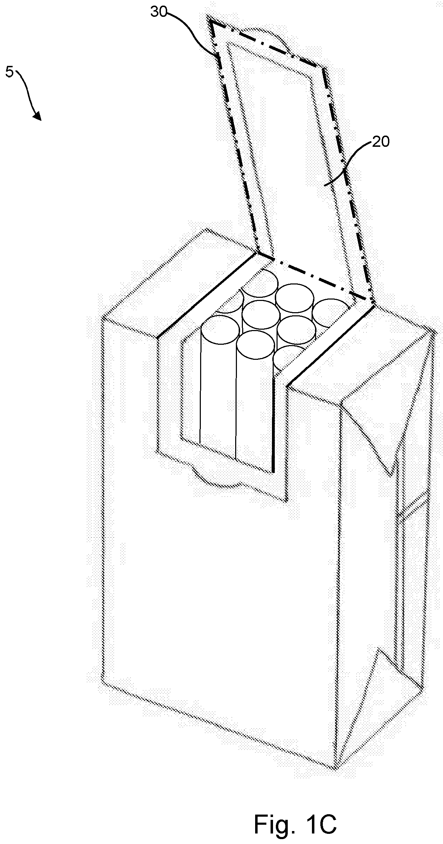

The outer wrapper 10 is sealed in an airtight manner (i.e. hermetically sealed) around the container 50. The outer wrapper 10 shown in Figure 1A is intended to remain around the container after the package has been opened for the first time. The outer wrapper 10 has an openable portion 20 which can be opened, by a user, to define an opening in the outer wrapper 10 to provide access to the contents of the container 50. The openable portion 20 can be defined by a line of weakness 45 in at least one layer of the wrapper 10. In this example, the openable portion 20 is a flap. Figure 1A shows the flap 20 in a closed configuration, in which the flap 20 seals the outer wrapper 10. Figure 1C shows the flap 20 in an open configuration, in which the flap 20 is pulled back to allow access to the interior of the wrapper 10. The flap 20 remains connected to the remainder of the wrapper 10 after the flap has been opened. The container 50 has a cut-out 48 in a region corresponding to the location of the openable portion 20.

The openable portion 20 can be reclosable or resealable. An advantage of this arrangement is that the products remain fresh after the package has been opened for the first time, as the outer wrapper 10 and the openable portion 20 continue to provide protection to the contents. An advantage of providing a wrapper 10 around a container 50 is that the container can be a simpler, lower cost, item as it no longer forms the exterior of the package. For example, the exterior finish of the container can be a simpler, lower cost, finish (e.g. matt instead of glossy) and does not need to be printed.

The outer wrapper 10 also comprises a valve 30. The valve 30 is openable and closable in response to a pressure differential across the valve, e.g. the valve 30 opens in response to a positive pressure differential between an interior of the package and an exterior of the package. The valve can be used to evacuate air from the interior of the package when the package is placed in a low pressure chamber. Thereafter, the valve 30 maintains the interior of the package at a sub-atmospheric pressure and prevents air from entering the interior of the package. The valve 30 can close when the pressure differential falls below a threshold positive value, e.g. when the pressure surrounding the package is greater than the pressure within the package. This can help to preserve the freshness of the packaged products, by reducing the amount of atmospheric air in contact with the packaged products. During packaging, some of the atmospheric air is evacuated from the interior of the package 5. Some of the air within the package can be replaced by an inert gas, such as nitrogen, if desired, to further preserve freshness of the contents. The valve may be re-used if needed, such that the interior of the package can be restored to a sub-atmospheric pressure after the package has first been opened.

The valve 30 functions as a one-way valve. When the interior of the package is at a higher pressure than the exterior of the package, pressure is exerted on the valve area from within the package and a flow channel of the valve opens to release air from within the package. When the interior of the package is at a lower pressure than the exterior of the package, external pressure is exerted on the valve area and the contents of the pack support the inner surface of the wrapper and prevent the flow channel of the valve from opening.

The container 50 provides support during a period when the interior of the wrapper is partially evacuated, and resists deformation of the package. The outer wrapper 10 provides a hermetic seal between an interior of the package and an exterior of the package when the interior of the package is at a sub-atmospheric pressure.

The valve 30 is located on the openable portion 20. The location of the valve 30 is generally shown in Figures 1A and 1C. An advantage of this location of the valve is that it strengthens the openable portion 20, such as the flap, and helps to prevent curling of the flap edges. The openable portion 20 of the wrapper 10 is thicker in the region where the valve 30 is fitted. This increased thickness can help to prevent curling at the edges of the openable portion 20. The valve 30 shown in Figures 1A and 1C has a generally rectangular shape. However, it can be manufactured to any desired shape. For example, the perimeter of the valve can have curved corners or non-linear edges. The valve can be circular, oval, triangular, square or any other desired shape. The valve shown in Figures 1A and 1C extends around two planar surfaces (front, top) of the package. The valve may be limited to one planar surface.

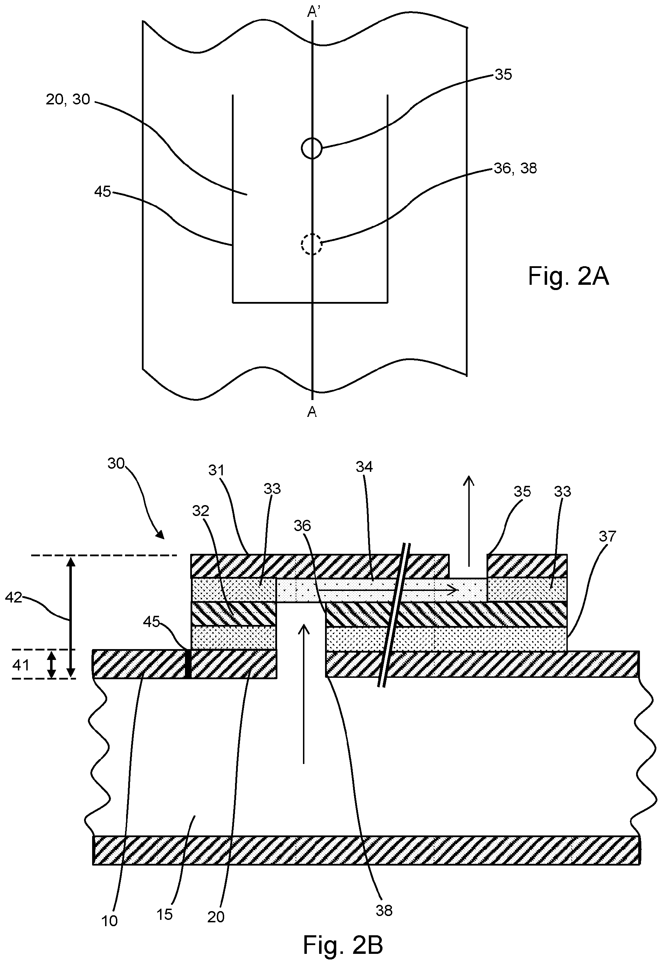

Figures 2A and 2B show an example of a valve 30 secured to an openable portion 20 of a wrapper. Figure 2A shows the outside of the wrapper in plan view. Figure 2B shows a cross-section through the valve and openable portion, along line A-A' of Figure 2A. The valve 30 is fixed to an outer surface of the openable portion 20 of the wrapper. A perimeter of the openable portion 20 is defined by a line of weakness 45 in the sheet material. In this example the one-way valve 30 extends substantially up to the perimeter.

The valve 30 comprises a first layer 31 and a second layer 32 which are joined together over at least part of their surface area by adhesive 33. An opening 35 is provided in the first layer. An opening 36 is provided in the second layer 32 at a position which is laterally offset from the opening 35. A flow channel 34 is defined between the opening 35 and the opening 36. The flow channel can comprise a resealable adhesive, such as Pressure Sensitive Adhesive (PSA) which can seal the flow channel 34 until a pressure differential between an interior of the package and the exterior of the package exceeds a predetermined value. The valve is secured to an outer surface of the openable portion 20 of the wrapper by adhesive 37. An opening 38 is provided in the openable portion 20. The valve 30 is positioned such that opening 36 in the second layer 32 of the valve is positioned over opening 38 in the openable portion 20. In use, air can pass from the interior 15 of the wrapper to the exterior via the opening 38, the opening 36, the flow channel 34 and the opening 35 when there is a suitable pressure differential between the interior 15 and the exterior. Atmospheric pressure at sea level is around 1000mbar. The pressure within the package can be lower than atmospheric pressure. An example non-limiting range of pressures within the package is 300-700mbar. The valve of Figures 2A and 2B allows air to flow when the pressure within the wrapper 20 is greater than the pressure outside the wrapper by a predetermined amount. When the pressure within the wrapper 20 is lower than the pressure outside the wrapper by a predetermined amount, the flow channel will close and the interior space 15 is sealed.

Figure 2B shows thickness 41 of the wrapper/openable portion 20 without a valve fitted to it, and a thickness 42 of a combination of the flap and a valve. This increased thickness can help to prevent curling at the edges of the openable portion 20. For example, thickness 41 may be in the range of 30-50 microns, whereas thickness 42 may be in the range of 100-150 microns.

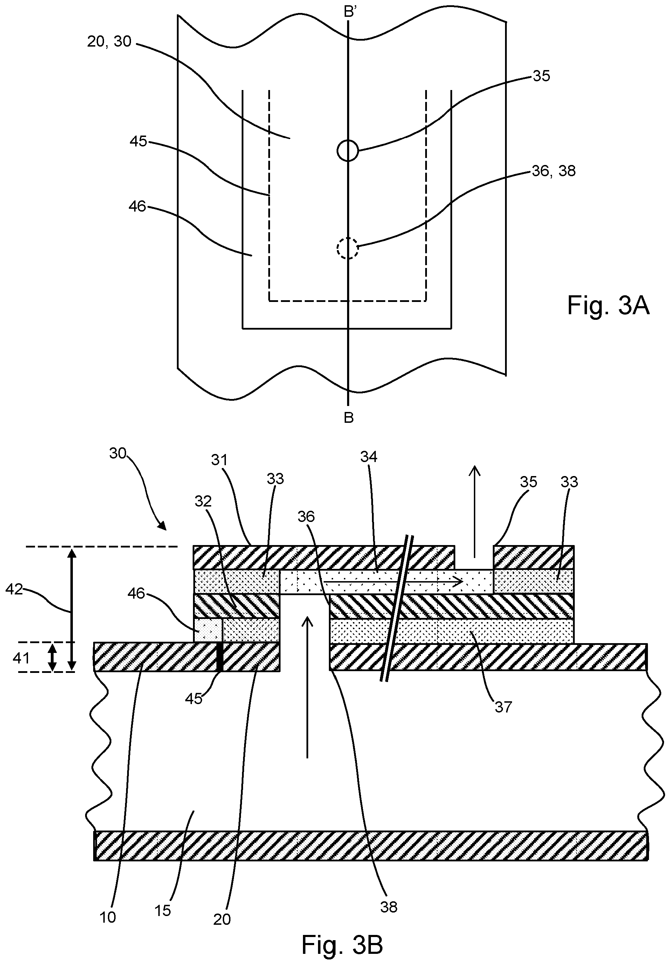

Figures 3A and 3B show another example of a valve 30 secured to an openable portion 20 of a wrapper. Figure 3A shows the outside of the wrapper in plan view. Figure 3B shows a cross-section through the valve and openable portion, along line B-B' of Figure 3A. The valve 30 is fixed to an outer surface of the openable portion 20 of the wrapper. A line of weakness 45 in the sheet material defines the openable portion 20. The valve shown in Figure 3A and 3B extends beyond the perimeter of the openable portion 20. A resealable adhesive is provided between the one-way valve 30 and a region of the flexible sheet material 10 surrounding the openable portion 20. Resealable adhesive (e.g. PSA) 46 is provided on the lower surface of layer 32 of the valve 30. The resealable adhesive 46 is provided at the periphery of the valve 30. The valve of Figure 3 can perform a resealing function and can reseal an opening in the wrapper after the openable portion 20 has first been opened.

The valve shown in Figures 2B and 3B is one possible example of a valve. Multi-layer valves provide a low profile solution and avoid the need for a bulge in the exterior of the outer wrapper, or the need to provide space within the package to accommodate the valve. The valve 30 shown in Figures 2B and 3B has two layers 31, 32. The valve can comprise further layers. For example, a further layer laid over the top of layer 31 which provides a further flow channel between opening 35 and the surrounding atmosphere.

The openable portion 20 of the wrapper 10 can be defined by a line of weakness in at least one layer of the multi-layer sheet material, which can be used to create the opening at the time of first opening the package. The openable portion 20 can comprise a flap in the flexible sheet material of the wrapper. The openable portion 20 can comprise an adhesive label or similar element to reclose the portion 20 to the wrapper after the opening has been created. In an embodiment where the wrapper is formed of a multiple layer laminate, it is possible to provide a resealable opening within the layers of the laminate material, as will be described below.

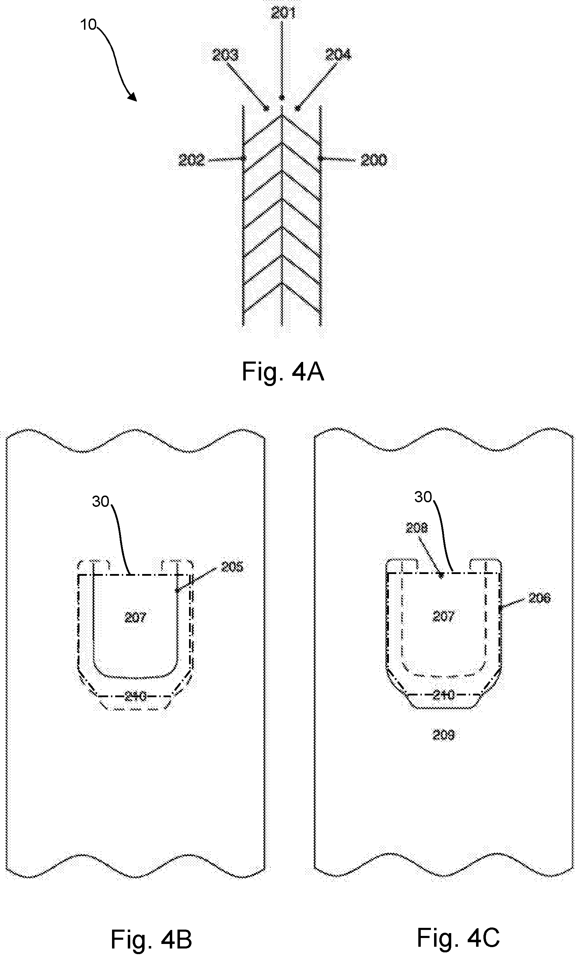

An example three layer laminate is shown in Figure 4A, comprising: a first outer layer 200, an inner layer 201 and a second outer layer 202. The first outer layer 200 is bonded to the inner layer 201. The inner (e.g. foil) layer 201 is bonded to the second outer layer 202. The first outer layer 200 can be formed, for example, of a polymer material, such as a 20 micron orientated polypropylene (OPP). The inner layer 201 can be formed, for example, of a foil, such as a 9 micron Aluminium foil. A foil layer is particularly advantageous at providing a moisture barrier to maintain freshness. The second outer layer 202 can be formed of a polymer material, which may be the same as the first outer layer, or a different polymer material. The layers 200, 201, 202 can be laminated together utilising a permanent lamination adhesive. A resealable opening can be created in the laminate package by utilising a Pressure Sensitive Adhesive (PSA) 203 to bond the second outer layer 202 to the inner layer 201. The Pressure Sensitive Adhesive can be used between these layers locally in the region 206 of the opening, or generally between these layers. In the example of Figures 4B, 4C, the second outer layer 202 will form the inside of a package formed of the laminate material. An opening is defined by cuts 205, 206, formed in the first outer layer 200 and the inner layer 201. The cuts are offset from one another, to define a region where the first outer layer 200 can adhere to the inner layer 201. A first cut 206 is formed in the first outer layer 200 and the inner layer 201. A second cut 205 is formed through the second outer layer 202. Figure 4B shows the laminate, after the cuts 205, 206 are formed, from the second outer side (the inside of a package). Figure 4C shows the laminate, after the cuts 205, 206 are formed, from the first outer side (the outside of a package). The dashed lines indicate the location of cuts 205, 206 where the actual cut is not visible in the particular view as it is through a layer of material which is hidden from view.

The cuts 205, 206 form a flap of laminate material 207 which is unitary with the rest of the sheet 209 along the top edge 208 of the flap. The location of the two cuts 205, 206 defines an overlap region 210 in which layers of the flap extend over layers of the remainder of the package. The central area of the flap 207 is formed of all three layers while the edge of the flap, in the overlap region 210, is formed of inner layer 201 and first outer layer 200. In the overlap region the inner layer 201 of the flap is adhered to the second outer layer 202 which remains part of the rest of the material in that region due to the offset of the two cuts 205, 206.

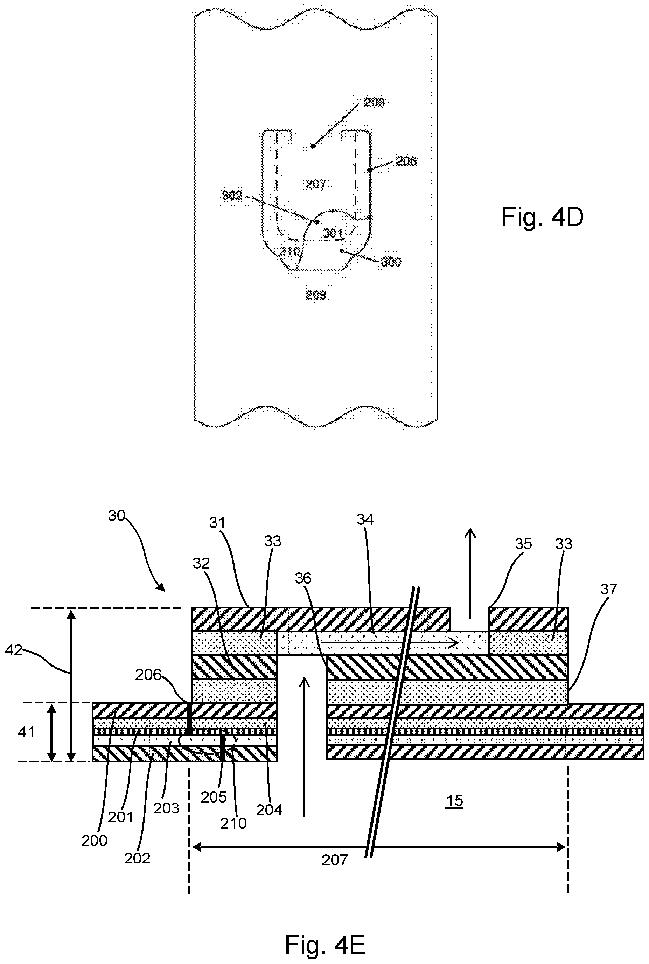

Figure 4D shows the resealable opening of Figures 4A-4C in a partially opened position. The flap 207 has been pulled open to separate the overlap region 210. Area 300 therefore comprises the second outer layer 202. The PSA 203 remains adhered to the first inner layer 201 in area 302 as it has a greater affinity for that material than the material of the outer layers. As the flap 207 is opened, an opening 301 is created through the laminate material. The opening 301 may be resealed by pressing the edge region of the flap which carries the PSA on to the exposed area 300 of the second outer layer 202, to return the opening to the configuration shown in Figures 4B and 4C. The arrangement of cuts through selected layers and use of a pressure sensitive adhesive between two layers thereby allow the formation of a resealable opening in the laminate material without any additional components.

Figure 4E shows a cross-section through a flap and valve of the type shown in Figures 4B-4D. The valve 30 is secured to the first outer layer 200. When the flap is opened, the valve 30, the first outer layer 200 and the inner layer 201 remain together and form the flap. An opening is formed in the region 206. It can be seen that the flap 207 has a thickness 42 which is greater than the thickness 41 of the remainder of the sheet material. This reduces or prevents curling in the region 210.

In an alternative embodiment, the edge region of the flap can be formed of only an outer layer as opposed to an outer and an inner layer as shown in the embodiment of Figures 4B and 4C. To form a resealable opening, a first cut is formed in the first outer layer and a second cut is formed through the second outer layer and the inner layer. The central region of the flap comprises all three layers, but the edge of the flap in the overlap region is only formed of first outer layer. The opening of this embodiment operates on the same principles as that of Figure 4B and 4C, but the separation in the overlap region is between the inner layer 201 and the first outer layer 200. This arrangement may give a different tactile feel to the opening as the edge of the flap will be thinner.

The pressure sensitive adhesive of any embodiments may be patterned to leave areas without any adhesive to make the flap easier to open. In particular, an area in the overlap region 210 may be left without any adhesive. The PSA 203 between the inner layer 201 and the second outer layer 202 can be patterned such that the region below the pull tab is free from PSA. The pull tab may therefore be easily lifted up and used to pull open the flap.

As will be appreciated the shape and design of the cuts may be varied according to the aesthetic and functional requirements of each design, provided the offset relationship of the first and second cuts is maintained to provide the overlap region 210. For example, different shapes may be utilised according to design, or the curvature and shape of the cuts may be selected to avoid tearing of the materials as the flap is opened. As the cut designs become more complex and/or the dimensions of the cut lines increase the time taken to form the openings may increase.

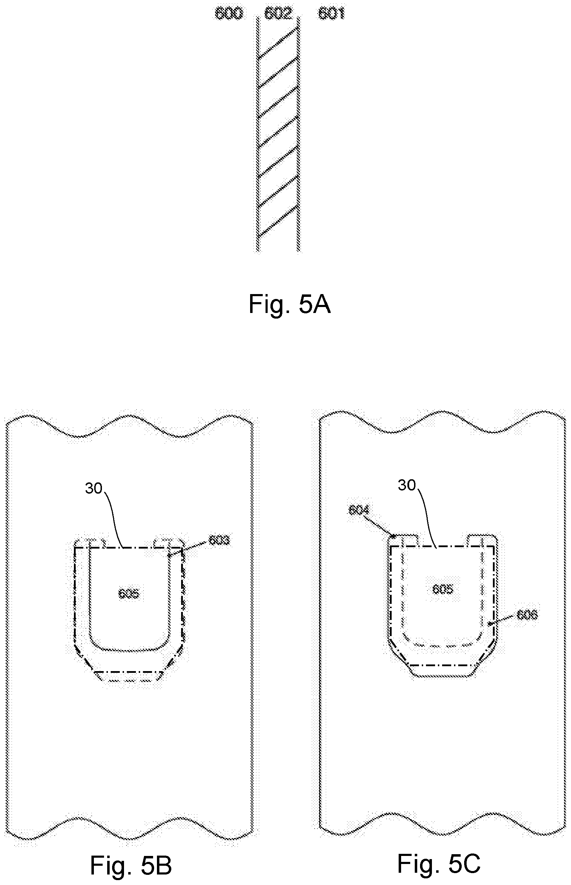

In a variation of the opening described above, a two-layer laminate may be utilised. The principles described above apply in the same way to such a laminate. Figure 5A shows a two-layer laminate with a resealable opening. First layer 600 is bonded to second layer 601 with a PSA 602. To form the opening, a first cut 603 is made through first layer 600, and a second cut 604 is made through second layer 601. As explained hereinbefore, dashed lines indicate cuts through a layer which is not visible in a particular view. Second layer 601 will form the outside of a package formed from the laminate material. The resealable opening opens in the same way as the triple-laminate opening described above by pulling the flap 605 open to separate the layers around the overlap region 606. The PSA may be patterned as described hereinbefore to provide a pull-tab, and as noted above the shape and design of the cuts may be varied as required.

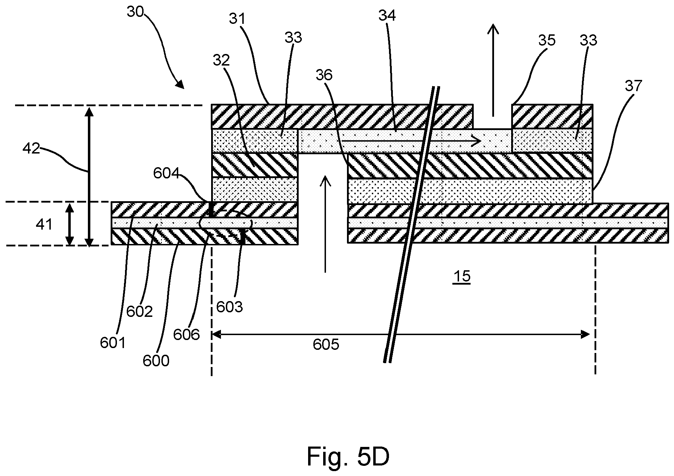

Figure 5D shows a cross-section through a flap and valve of the type shown in Figures 5B and 5C. The valve 30 is secured to the first outer layer 601. When the flap is opened, the valve 30 and the first outer layer 601 remain together and form the flap. An opening is formed in the region 606. It can be seen that the flap 605 has a thickness 42 which is greater than the thickness 41 of the remainder of the sheet material. This reduces or prevents curling in the region 606.

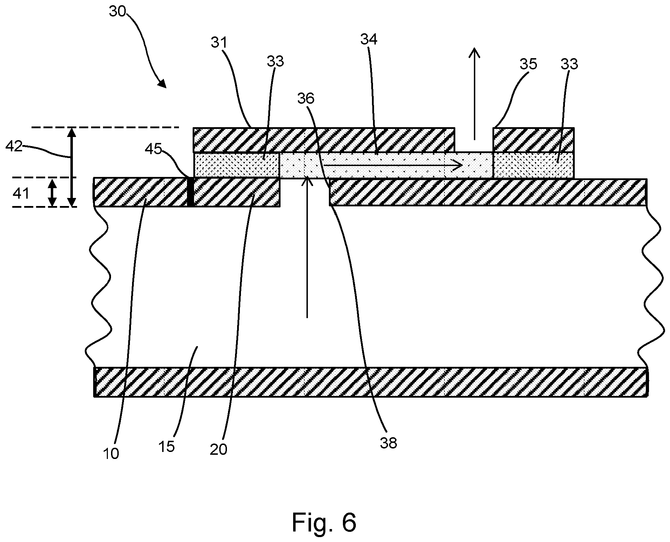

In Figures 2B and 3B a valve is fixed to an openable portion, i.e. the valve is a separate functioning item which is glued to the outer surface of the openable portion 20 of the wrapper 10. Figure 6 shows an alternative example of an openable portion 20 and a valve 30. Compared to Figure 2B there is only one extra layer 31 and adhesive 33. A flow channel 34 is formed within the space between the top layer of the openable portion 20 and the extra layer 31. The openable portion 20 has increased thickness 42 compared to the thickness 41 of the wrapper 10. More generally, at least one layer of the valve 30 is provided by at least one layer of the wrapper 10. In Figure 6 one layer of the valve 30 is provided by the wrapper 10. In another example, the valve has three layers and two layers of the valve 30 can be provided by two layers of the wrapper 10. A flow channel of the valve may be provided between the outer layer of the wrapper and the additional layer secured to the wrapper in the region of the openable portion 20. Alternatively, a flow channel of the valve may be provided between the outer layers of the laminate wrapper, with the additional layer being secured to the outer layer of the wrapper in the region of the openable portion 20 to provide additional thickness in the region of the openable portion.

The above embodiments have been described in relation to a three- and two-layer laminate, but as will be appreciated any number of layers may be utilised provided two of the layers are bonded with a PSA. The layers of the laminate material may be selected to provide the desired mechanical and tactile performance. For example, a thicker material may give a better feel to a user opening the flap. Different aspects of the package may require different characteristics, requiring a design compromise to select an appropriate material. For example, the body of the package may preferably have a thicker material to give a more rigid package, whereas the flap may preferably use a thinner material to make opening the closure more tactile. The relative thicknesses of the materials may also affect the performance of the product. For example, thickening a metallic layer will have a different effect to thickening a plastic layer.

The PSA is selected such that a sufficient bond is formed to retain the flap in the closed position, while also allowing the flap to be opened by the application of an appropriate force. Furthermore, since the same layer of PSA retains the layers of the laminate together, the bond should be sufficient to prevent delamination during use. The required bond may be achieved by the selection of an appropriate adhesive, and the amount of that adhesive utilised.

The package can be designed for any quantity of tobacco industry products and is not limited to standard shapes and sizes.

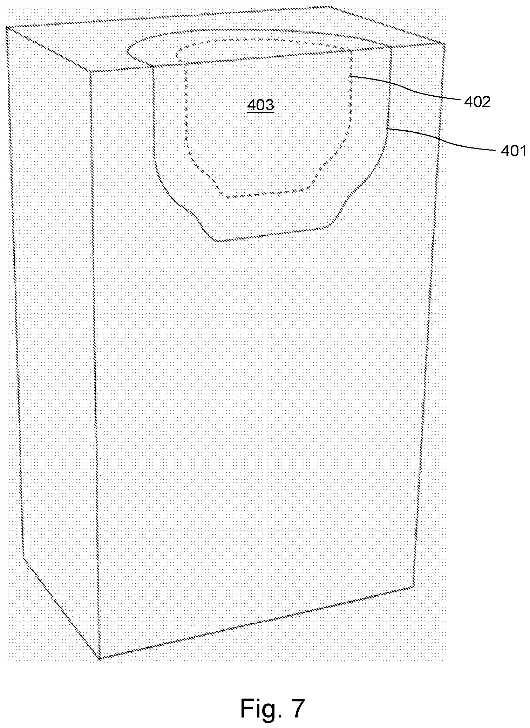

In the examples shown in Figures 1A, 1B, 4B-4D, 5B and 5C the openable portion is shown as a flap which is unitary with the wrapper and remains connected to the wrapper after the package has been opened for the first time. In an alternative form of the package the openable portion can be separated from the package. Figure 7 shows an example of a package 400 formed using the three-layer laminate of Figure 4A. The openable portion 403 is defined by lines of weakness 401, 402 in layers of the wrapper. The lines of weakness have a closed path. The term "closed path" is used herein to describe a path which has no ends and which defines a closed area within the path.

A first line of weakness 401 following a closed path is made through the first outer layer 200 and inner layer 201 of the laminate, and a second line of weakness 402 following a closed path is made through only the second outer layer 202. The first 401 and/or second 402 lines of weakness may be continuous cuts through the respective layers, or may be a perforation, score, or scribe line only partially breaking the respective layers. The second line of weakness 402 is indicated in Figure 7 as a dashed line as it is not visible in the view of the figure as it is behind the inner layer 201 and first outer layer 200.

In use, the package 400 is opened by removing the area 403 within the first cut 401 from the remainder of the package. This area is attached to the remainder of the packaging by the PSA between the inner layer 201 and second outer layer 202 in the peripheral region of the area 403 between the first lines of weakness 401 and second lines of weakness 402. The central region of the area 403 is formed of all three layers 200, 201, 202, whereas the peripheral region is formed of the first outer layer 200 and inner layer 201. When the area 403 is removed an opening is created in the central region through which the contents of the package may be accessed. Where the first 401 and/or second 402 lines of weakness are perforations, scribe or score lines, the material is broken along that line during opening.

Package 400 may also be opened by partially removing the area 403 such that it remains attached by the PSA to the remainder of the package along part of the peripheral region, but is sufficiently opened to access the content.

When access is complete the area 403 may be replaced in its location to reseal the package. However, when replaced the positioning and appearance of the area will not be perfect and hence it will be immediately apparent that the package has been previously opened, particularly where perforations, scribe, or score lines are used in place of complete cuts. A tamper-proof package is therefore provided.

Figures 1A-1C show a package where the wrapper 10 is sealed around the container 50. In an alternative example, the wrapper 10 can be located within a container, such as a conventional flip-top box. In another example, the container 50 can be omitted altogether and the wrapper 10 itself forms an enclosure for a product. The product can comprise a quantity of individual items (e.g. tobacco industry products such as cigarettes, cigars) or a loose product (e.g. a tobacco industry product such as rolling tobacco). The product can comprise food, such as coffee, a trayed meal product, fish, cheese etc.

In Figures 1A and 1C the sheet is used as a wrapper. The sheet can be used to form other types of package, such as a bag or pouch.

The above example has been given in relation to packaging for tobacco industry products, but as will be appreciated the same principles apply to packages for any type of product.

The lines of weakness described above may be formed by cutting a laminate material using lasers. Other cutting techniques may be utilised as appropriate, for example the cuts may be formed in the layers prior to lamination, or different cutting technologies may be used.

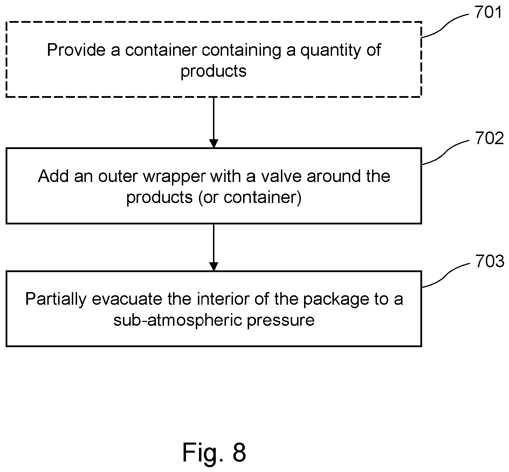

A method of packaging a commodity will now be described with reference to Figure 8. At step 701 a quantity of a commodity (e.g. tobacco industry products such as cigarettes) are fitted within a container, such as a frame or box. At step 702 an outer wrapper is added around the container. The outer wrapper comprises at least a single layer flexible sheet material. The outer wrapped is sealed, such as by induction heating or adhesive, to provide a hermetic seal between an interior of the package and an exterior of the package. At step 703 the interior of the package is partially evacuated to a sub-atmospheric pressure. A valve is provided in, or on, the outer wrapper, wherein the one-way valve is capable of maintaining a pressure differential between the interior of the package and the exterior of the package when the interior of the package is at the sub-atmospheric pressure. The valve can be provided as part of the wrapper. One way of partially evacuating the interior of the package to a sub-atmospheric pressure comprises evacuating an environment surrounding the package to a sub-atmospheric pressure. This causes a pressure differential between the interior of the package and the surrounding environment (i.e. interior pressure higher than surrounding pressure). This causes air to flow out of the package, through the valve. Subsequently, the package is moved to an environment with a normal atmospheric pressure. As described above, the valve functions as a one-way valve and prevents air from flowing into the package when the pressure within the package is lower than the pressure surrounding the package.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and a method or apparatus may contain additional blocks or elements.

## Claims

1. A sheet (10) for forming a package (5) comprising:
a flexible sheet (10) having at least a single layer, the flexible sheet (10) having a first thickness;
an openable portion (20, 403) defined by a line of weakness (45, 401, 402) in at least one layer of the flexible sheet (10);
**characterised by**;
a valve (30) comprising a plurality of layers (31, 32, 200, 201, 202, 600, 601) arranged on top of one another and a flow path (34) through the layers (31, 32, 200, 201, 202, 600, 601) which is openable and closable in response to a pressure differential across the plurality of layers (31, 32, 200, 201, 202, 600, 601),
wherein the valve (30) is located on the openable portion (20, 403) and provides the openable portion (20, 403) with a second thickness which is greater than the first thickness.

2. A sheet (10) according to claim 1 wherein the openable portion (20, 403) is a flap (20) which is unitary with the flexible sheet (10).

3. A sheet (10) according to claim 1 wherein the openable portion (20, 403) is separable from the flexible sheet (10).

4. A sheet (10) according to any one of the preceding claims wherein the openable portion (20, 403) is resealable to provide a resealable opening in the sheet (10).

5. A sheet (10) according to any one of the preceding claims wherein the openable portion (20, 403) of the sheet (10) has a perimeter along which the opening is formed and the valve (30) extends substantially up to the perimeter.

6. A sheet (10) according to any one of claims 1 to 4 wherein the openable portion (20, 403) of the sheet has a perimeter along which the opening is formed and the valve (30) extends beyond the perimeter, and wherein a resealable adhesive (46) is provided between the valve (30) and a region of the flexible sheet material (10) surrounding the openable portion (20).

7. A sheet (10) according to any one of the preceding claims wherein the line of weakness (45, 401, 402) is one of: a continuous cut, a perforation, a score line, a scribe line.

8. A sheet (10) according to any one of the preceding claims wherein the valve (30) is secured to a surface of the flexible sheet material (10).

9. A sheet (10) according to any one of the preceding claims wherein at least one of the plurality of layers (31, 32) of the valve (30) comprises the at least single layer of the flexible sheet (10).

10. A sheet (10) according to any one of the preceding claims wherein the flexible sheet (10) is a multi-layer laminate and the openable portion (20, 403) is defined by:
a first line of weakness (401) in at least a first of the layers (200) of the laminate defining a first flap portion;
a second line of weakness (402) in at least a second layer (202) of the laminate defining a second flap portion, wherein the at least a first of the layers (200) is different from the at least a second of the layers (202);
wherein the second line of weakness (402) is located within the first line of weakness (401), the arrangement of the first and second lines of weakness (401, 402) allowing the first flap portion and the second flap portion to be lifted together to create an opening in the laminate, the first flap portion separating from the second layer (202) in a peripheral region of the first flap portion between the first and second lines of weakness (401, 402), and wherein a resealable adhesive seal is provided between the peripheral region and the second layer of the laminate (202).

11. A sheet (10) according to claim 10 wherein the openable portion (20, 403) comprises a tab without a resealable adhesive seal between the tab and the second layer (202) of the laminate.

12. A sheet (10) according to any one of the preceding claims wherein the sheet (10) is a multi-layer laminate.

13. A sheet (10) according to claim 12 wherein the laminate comprises a foil or metallised layer (201).

14. A sheet (10) according to any one of the preceding claims wherein the second thickness is at least twice the first thickness.

15. A sheet (10) according to claim 14 wherein the second thickness is at least three times the first thickness.

16. A package (5) comprising a sheet (10) according to any one of the preceding claims.

17. A package (5) according to claim 16 and further comprising a container (50) for containing a quantity of a product, wherein the sheet (10) is an outer wrapper located around the container (50).

18. A package (5) according to claim 16 wherein the sheet (10) is a wrapper located around a quantity of a product, the package (5) further comprising a container (50) with an openable portion (20, 403),
wherein the quantity of the wrapper-enclosed product is within the container (50) and wherein the openable portion (20, 403) of the wrapper is located beneath the openable portion of the container (50).

19. A package (5) according to claim 17 or 18 wherein the product is a tobacco industry product.

## Patentansprüche

1. Ein Blatt (10) zu dem Ausbilden einer Verpackung (5), umfassend:
ein flexibles Blatt (10), das zumindest eine einzige Schicht aufweist, wobei das flexible Blatt (10) eine erste Dicke aufweist;
einen aufmachbaren Abschnitt (20, 403), der durch eine Schwächungslinie (45, 401, 402) in zumindest einer Schicht des flexiblen Blattes (10) definiert ist;
**gekennzeichnet durch**:
ein Ventil (30), das eine Vielzahl von Schichten (31, 32, 200, 201, 202, 600, 601), die aufeinander angeordnet sind, und einen Strömungspfad (34) durch die Schichten (31, 32, 200, 201, 202, 600, 601) umfasst, der als Antwort auf eine Druckdifferenz über die Vielzahl von Schichten (31, 32, 200, 201, 202, 600, 601) auf- und zumachbar ist,
wobei das Ventil (30) sich auf dem aufmachbaren Abschnitt (20, 403) befindet und dem aufmachbaren Abschnitt (20, 403) eine zweite Dicke verschafft, die größer ist als die erste Dicke.

2. Ein Blatt (10) nach Anspruch 1, wobei der aufmachbare Abschnitt (20, 403) eine Lasche (20) ist, die mit dem flexiblen Blatt (10) einstückig ist.

3. Ein Blatt (10) nach Anspruch 1, wobei der aufmachbare Abschnitt (20, 403) von dem flexiblen Blatt (10) trennbar ist.

4. Ein Blatt (10) nach einem der vorstehenden Ansprüche, wobei der aufmachbare Abschnitt (20, 403) wiederverschließbar ist, um eine wiederverschließbare Öffnung in dem Blatt (10) bereitzustellen.

5. Ein Blatt (10) nach einem der vorstehenden Ansprüche, wobei der aufmachbare Abschnitt (20, 403) des Blattes (10) einen Umfang aufweist, entlang dem die Öffnung ausgebildet ist, und das Ventil (30) sich in dem Wesentlichen bis zu dem Umfang erstreckt.

6. Ein Blatt (10) nach einem der Ansprüche 1 bis 4, wobei der aufmachbare Abschnitt (20, 403) des Blattes einen Umfang aufweist, entlang dem die Öffnung ausgebildet ist, und das Ventil (30) sich über den Umfang hinaus erstreckt und wobei ein wiederverschließbarer Kleber (46) zwischen dem Ventil (30) und einem Gebiet des flexiblen Blattmaterials (10) bereitgestellt ist, das den aufmachbaren Abschnitt (20) umgibt.

7. Ein Blatt (10) nach einem der vorstehenden Ansprüche, wobei die Schwächungslinie (45, 401, 402) eines aus Folgendem ist: ein kontinuierlicher Schnitt, eine Perforierung, eine Bruchlinie, eine Ritzlinie.

8. Ein Blatt (10) nach einem der vorstehenden Ansprüche, wobei das Ventil (30) an einer Oberfläche des flexiblen Blattmaterials (10) befestigt ist.

9. Ein Blatt (10) nach einem der vorstehenden Ansprüche, wobei zumindest eine aus der Vielzahl von Schichten (31, 32) des Ventils (30) die zumindest eine einzige Schicht des flexiblen Blattes (10) umfasst.

10. Ein Blatt (10) nach einem der vorstehenden Ansprüche, wobei das flexible Blatt (10) ein Vielschichtlaminat ist und der aufmachbare Abschnitt (20, 403) durch Folgendes definiert ist:
eine erste Schwächungslinie (401) in zumindest einer ersten der Schichten (200) des Laminats, die einen ersten Laschenabschnitt definiert;
eine zweite Schwächungslinie (402) in zumindest einer zweiten Schicht (202) des Laminats, die einen zweiten Laschenabschnitt definiert, wobei die zumindest eine erste der Schichten (200) sich von der zumindest einen zweiten der Schichten (202) unterscheidet;
wobei die zweite Schwächungslinie (402) sich innerhalb der ersten Schwächungslinie (401) befindet, wobei die Anordnung der ersten und der zweiten Schwächungslinie (401, 402) ermöglicht, dass der erste Laschenabschnitt und der zweite Laschenabschnitt zusammen angehoben werden, um eine Öffnung in dem Laminat zu erzeugen, wobei der erste Laschenabschnitt sich von der zweiten Schicht (202) in einem Randgebiet des ersten Laschenabschnitts zwischen der ersten und der zweiten Schwächungslinie (401, 402) ablöst, und wobei ein wiederverschließbarer Klebeverschluss zwischen dem Randgebiet und der zweiten Schicht des Laminats (202) bereitgestellt ist.

11. Ein Blatt (10) nach Anspruch 10, wobei der aufmachbare Abschnitt (20, 403) eine Schlaufe ohne wiederverschließbaren Klebeverschluss zwischen der Schlaufe und der zweiten Schicht (202) des Laminats umfasst.

12. Ein Blatt (10) nach einem der vorstehenden Ansprüche, wobei das Blatt (10) ein Vielschichtlaminat ist.

13. Ein Blatt (10) nach Anspruch 12, wobei das Laminat eine Folie oder metallisierte Schicht (201) umfasst.

14. Ein Blatt (10) nach einem der vorstehenden Ansprüche, wobei die zweite Dicke zumindest doppelt so groß ist wie die erste Dicke.

15. Ein Blatt (10) nach Anspruch 14, wobei die zweite Dicke zumindest dreimal so groß ist wie die erste Dicke.

16. Eine Verpackung (5), umfassend ein Blatt (10) nach einem der vorstehenden Ansprüche.

17. Eine Verpackung (5) nach Anspruch 16 und weiter umfassend einen Behälter (50) zu dem Fassen einer Menge eines Produkts, wobei das Blatt (10) eine Außenumhüllung ist, die sich um den Behälter (50) befindet.

18. Eine Verpackung (5) nach Anspruch 16, wobei das Blatt (10) eine Umhüllung ist, die sich um eine Menge eines Produkts befindet, wobei die Verpackung (5) weiter einen Behälter (50) mit einem aufmachbaren Abschnitt (20, 403) umfasst,
wobei die Menge des von der Umhüllung umschlossenen Produkts innerhalb des Behälters (50) ist und wobei der aufmachbare Abschnitt (20, 403) der Umhüllung sich unterhalb des aufmachbaren Abschnitts des Behälters (50) befindet.

19. Eine Verpackung (5) nach Anspruch 17 oder 18, wobei das Produkt ein Produkt der Tabakindustrie ist.

## Revendications

1. Feuille (10) pour former un emballage (5) comprenant :
une feuille flexible (10) ayant au moins une couche unique, la feuille flexible (10) ayant une première épaisseur ;
une portion ouvrable (20, 403) définie par une ligne de faiblesse (45, 401, 402) dans au moins une couche de la feuille flexible (10) ;
**caractérisée par** :
une valve (30) comprenant une pluralité de couches (31, 32, 200, 201, 202, 600, 601) agencées les unes sur les autres et un chemin d'écoulement (34) à travers les couches (31, 32, 200, 201, 202, 600, 601) qui peut être ouvert et fermé en réponse à une différence de pression à travers la pluralité de couches (31, 32, 200, 201, 202, 600, 601),
dans laquelle la valve (30) se situe sur la portion ouvrable (20, 403) et fournit à la portion ouvrable (20, 403) une deuxième épaisseur qui est supérieure à la première épaisseur.

2. Feuille (10) selon la revendication 1 dans laquelle la portion ouvrable (20, 403) est un rabat (20) qui est unitaire avec la feuille flexible (10).

3. Feuille (10) selon la revendication 1 dans laquelle la portion ouvrable (20, 403) est séparable de la feuille flexible (10).

4. Feuille (10) selon l'une quelconque des revendications précédentes dans laquelle la portion ouvrable (20, 403) est détachable pour fournir une ouverture détachable dans la feuille (10).

5. Feuille (10) selon l'une quelconque des revendications précédentes dans laquelle la portion ouvrable (20, 403) de la feuille (10) a un périmètre le long duquel l'ouverture est formée et la valve (30) s'étend sensiblement jusqu'au périmètre.

6. Feuille (10) selon l'une quelconque des revendications 1 à 4 dans laquelle la portion ouvrable (20, 403) de la feuille a un périmètre le long duquel l'ouverture est formée et la valve (30) s'étend au-delà du périmètre, et dans laquelle un adhésif détachable (46) est fourni entre la valve (30) et une région du matériau de feuille flexible (10) entourant la portion ouvrable (20).

7. Feuille (10) selon l'une quelconque des revendications précédentes dans laquelle la ligne de faiblesse (45, 401, 402) est l'une parmi : une découpe continue, une perforation, une pliure, une ligne de découpe.

8. Feuille (10) selon l'une quelconque des revendications précédentes dans laquelle la valve (30) est fixée à une surface du matériau en feuille flexible (10).

9. Feuille (10) selon l'une quelconque des revendications précédentes dans laquelle au moins une de la pluralité de couches (31, 32) de la soupape (30) comprend l'au moins une couche unique de la feuille flexible (10).

10. Feuille (10) selon l'une quelconque des revendications précédentes dans laquelle la feuille flexible (10) est un stratifié multicouche et la portion ouvrable (20, 403) est définie par :
une première ligne de faiblesse (401) dans au moins une première des couches (200) du stratifié définissant une première portion de rabat ;
une deuxième ligne de faiblesse (402) dans au moins une deuxième des couches (202) du stratifié définissant une deuxième portion de rabat, dans laquelle l'au moins une première des couches (200) est différente de l'au moins une deuxième des couches (202) ;
dans laquelle la deuxième ligne de faiblesse (402) se situe dans la première ligne de faiblesse (401), l'agencement des première et deuxième lignes de faiblesse (401, 402) permettant à la première portion de rabat et à la deuxième portion de rabat d'être soulevées ensemble pour créer une ouverture dans le stratifié, la première portion de rabat se séparant de la deuxième couche (202) dans une région périphérique de la première portion de rabat entre les première et deuxième lignes de faiblesse (401, 402), et dans laquelle un joint d'adhésif détachable est fourni entre la région périphérique et la deuxième couche du stratifié (202).

11. Feuille (10) selon la revendication 10 dans laquelle la portion ouvrable (20, 403) comprend une languette sans un joint d'adhésif détachable entre la languette et la deuxième couche (202) du stratifié.

12. Feuille (10) selon l'une quelconque des revendications précédentes dans laquelle la feuille (10) est un stratifié multicouche.

13. Feuille (10) selon la revendication 12 dans laquelle le stratifié comprend une pellicule ou couche métallisée (201).

14. Feuille (10) selon l'une quelconque des revendications précédentes dans laquelle la deuxième épaisseur fait au moins deux fois la première épaisseur.

15. Feuille (10) selon la revendication 14 dans laquelle la deuxième couche fait au moins trois fois la première épaisseur.

16. Emballage (5) comprenant une feuille (10) selon l'une quelconque des revendications précédentes.

17. Emballage (5) selon la revendication 16 et comprenant en outre un contenant (50) pour contenir une quantité d'un produit, dans lequel la feuille (10) est une enveloppe extérieure située autour du contenant (50).

18. Emballage (5) selon la revendication 16 dans lequel la feuille (10) est une enveloppe située autour d'une quantité d'un produit, l'emballage (5) comprenant en outre un contenant (50) avec une portion ouvrable (20, 403),
dans lequel la quantité du produit entouré par l'enveloppe se trouve dans le contenant (50) et dans lequel la portion ouvrable (20, 403) de l'enveloppe se situe sous la portion ouvrable du contenant (50).

19. Emballage (5) selon la revendication 17 ou 18 dans lequel le produit est un produit industriel de tabac.
